# EUROPÄISCHE PATENTANMELDUNG

(11) **EP 1 455 148 A2**
(43) Veröffentlichungstag der Anmeldung: **08.09.2004**
(21) Anmeldenummer: 04005350.6
(22) Anmeldetag: 05.03.2004
(51) Int. Cl.: F24J 3/08, F28D 20/00

(54) **Vorrichtung zur Nutzung von Erdwärme**

(30) Priorität: 05.03.2003 DE 20303484 U
(71) Anmelder: ELWA Wassertechnik GmbH, 49767 Twist (DE)
(72) Erfinder: Vogt, Wolfgang, 49835 Wietmarschen (DE)
(74) Vertreter: Engelmann, Kristiana

(57) **Zusammenfassung**

Vorrichtung zur Nutzung von Erdwärme, mit insbesondere einen Flächenkollektor (R) als Wärmetauscher bildenden und ein Trägermedium zu einer Wärmepumpe fördernden Kollektorrohren (2), die in Einbaulage in einer Erdmulde (4) unter einer Abdecklage (5) verlegt sind, wobei durch diese Abdecklage (5) versickerndes Wasser (W,W') in den Bereich des Flächenkollektors (R) zuführbar ist, und wobei die Vorrichtung mit einer den Bereich der Erdmulde (4) bodenseitig abdeckenden Wassersperrschicht (6) versehen ist, wobei über dieser die Kollektorrohre (2) in einer zugeführtes Wasser aufnehmenden Speicherlage (7) verlaufen.

## Beschreibung

Die Erfindung betrifft eine Vorrichtung zur Nutzung von Erdwärme mit einem insbesondere als Flächenkollektor ausgebildeten Wärmetauscher gemäß dem Oberbegriff des Anspruchs 1.

Bei bekannten Vorrichtungen zur Nutzung der Erdwärme (DE 31 48 600 A1) wird zur Leistungserhöhung im Bereich jeweiliger im Erdreich verlegter Kollektorrohre eine Wasserzuführung angesprochen, wobei diese Kollektorrohre in Gräben verlegt und mittels einer Kiesschicht bedeckt sind. Zur Einleitung des Wassers in den Bereich der die Kollektorrohre aufnehmenden Kiesschicht sind zusätzliche Drainagerohre vorgesehen, die unmittelbar an den Regenablauf eines Hausdaches angeschlossen sind, so daß mit dieser nicht beeinflußbaren Wasserzuführung die Vorrichtung in ihrer Wirksamkeit wesentlich eingeschränkt ist.

Bei einer bekannten Vorrichtung in Form eines Erdwärmespeichers gemäß DE 27 31 178 wird zur Wärmespeicherung ein begrenztes Erdvolumen genutzt, das von dem umgebenden Erdreich durch einen allseitig fluiddicht geschlossenen Behälter getrennt ist. Durch die Wandungen dieses Behälters hindurch sind jeweilige Kollektorrohre in das umschlossene Erdvolumen so eingeführt, daß aus diesem geschlossenen System mittels eines externen Wärmetauschers die durch die Kollektorrohre entnommene Wärmeenergie des Erdwärmespeichers nutzbar ist.

Die Erfindung befaßt sich mit dem Problem, eine Vorrichtung zur Nutzung von Erdwärme zu schaffen, deren Flächenkollektor auch bei geringer verfügbarer Nutzfläche eine über lange Zeiträume weitgehend konstante, durch gezielte Befeuchtung der Umgebung der Kollektorrohre verbesserte sowie nutzerspezifisch regelbare Wärmeausbeute ermöglicht.

Ausgehend von einer Vorrichtung zur Nutzung von Erdwärme gemäß dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 26 verwiesen.

Die erfindungsgemäße Vorrichtung zur Nutzung von Erdwärme ist als eine die Kollektorrohre in einer Speicherlage aufnehmende und unter dieser mit einer Wassersperrschicht versehene Baueinheit ausgebildet, mit der eine Erhöhung der mittels der Kollektorrohre entnehmbaren Wärmeleistung des Systems erreichbar ist. Der durch die Sperrschicht hervorgerufene Wasserstau bewirkt durch die Kapillarwirkung bis Oberkante des Geländes eine erhöhte Wärmeleitfähigkeit und Wärmespeicherfähigkeit auch durch Sonnenenergie direkt eingeleiteter Wärme, wodurch eine schnelle Regeneration des Systems gewährleistet ist.

Diese Kombination einer Wassersperrschicht mit der Speicherlage ermöglicht bereits bei natürlich versickerndem Wasser über das Erdreich oder eine obere Sickermulde eine gezielte Erhöhung des Feuchtigkeitszustandes im Umfeld der Kollektorrohre, so daß mit dem durch die Sperrschicht verzögert ablaufenden und eine langsame Umströmung der Kollektorrohre bewirkenden Wasser die spezifische Entzugsleistung in der Speicherlage langzeitig auf dem hohen Niveau von wassergesättigtem Boden (z. B. 40 W/m²) gehalten ist.

Zusätzlich ist die Baueinheit im Bereich der über den Kollektorrohren verlaufenden Abdecklage vorzugsweise mit einer Versickerungsanlage für Wasser kombiniert. Dieser Anlage kann im Bereich der Speicherlage zusätzlich ein Drainagesystem zugeordnet werden, mit dem der Wassergehalt in der oberhalb der Sperrschicht gebildeten Austauschzone ("Strömungszone") regelbar ist. Damit ist eine Baueinheit geschaffen, deren Speicherlage ein die Umströmung der Kollektorrohre beeinflussendes Wasser-Leit-System aufweist. An dieses System kann eine Wassernutzungsund/oder Versickerungsanlage und/oder Muldenversickerung so angeschlossen werden, daß durch auf ein konstantes Maß regelbare Regenerationsfeuchtigkeit mit Zusatzwärmeenergie im Bereich der Sperrschicht eine konstante Wärmeleistung bereitgestellt wird und die mittels des externen Wärmetauschers in Form einer Wärmepumpe entnehmbar ist.

Insbesondere kann die Wassersperrschicht als ein einstückiges Wannenteil ausgebildet sein, mit dem bereits auf kleinen Grundflächen von Hausgärten o. dgl. eine effizient nutzbare Vorrichtung zur Erdwärmenutzung erreichbar ist.

Die über der Wassersperrschicht bzw. in dem Wannenteil verlaufende Speicherlage kann in ihrer die Wasseraufnahmefähigkeit bestimmenden Konsistenz durch unterschiedlichste Materialien so variiert werden, daß eine entsprechende Speicherung und/oder Weiterleitung des definiert zugeführten und über Drainageelemente sowie Drosselelemente oder Überlaufelement abgeleiteten Wassers möglich ist.

Weitere Einzelheiten und Vorteile der Erfindung ergeben sich aus der nachfolgenden Beschreibung und der Zeichnung, die ein Ausführungsbeispiel der erfindungsgemäßen Vorrichtung zur Nutzung von Erdwärme veranschaulicht. In der Zeichnung zeigen:
- Fig. 1: eine Prinzipdarstellung der Vorrichtung zur Nutzung von Erdwärme in Draufsicht auf einen Flächenkollektor mit mehreren mäanderförmig verlegten Kollektorrohren,
- Fig. 2: eine Schnittdarstellung gemäß einer Linie II-II in Fig. 1 als Prinzipbild,
- Fig. 3: eine Querschnittsdarstellung ähnlich Fig. 2 mit vergrößerter Darstellung der in einem Wannenteil vorgesehenen Bauteile,
- Fig. 4: eine Querschnittsdarstellung gemäß einer Linie IV-IV in Fig. 1,
- Fig. 5: eine teilweise geschnittene Seitenansicht der Vorrichtung gemäß einer Linie V-V in Fig. 1,
- Fig. 6: eine Schnittdarstellung ähnlich Fig. 5 mit der Vorrichtung im Bereich eines Regenwassernutzungssystems,
- Fig. 7: eine Prinzipdarstellung ähnlich Fig. 6 mit einer an das Nutzungssystem angeschlossenen Brunneneinrichtung,
- Fig. 8: eine vergrößerte Ausschnittsdarstellung der Vorrichtung im Nahbereich zu einem Versickerungssystem gemäß Fig. 5,
- Fig. 9: eine Prinzipdarstellung ähnlich Fig. 8 mit einer Drosselvorrichtung vor dem Versickerungssystem,
- Fig. 10: eine Prinzipdarstellung ähnlich Fig. 9 mit einer Verbindung zu einem Sickerblock,
- Fig. 11: eine geschnittene Seitenansicht der Drosselteile im Bereich der Drosselvorrichtung gemäß Fig. 9,
- Fig. 12 und 13: jeweilige Einzeldarstellungen von die Drosselvorrichtung bildenden Drosselscheiben gemäß Fig. 11, und
- Fig. 14: eine Schnittdarstellung ähnlich Fig. 6 mit einer im Bereich der Speicherlage vorgesehenen Deckfolie.

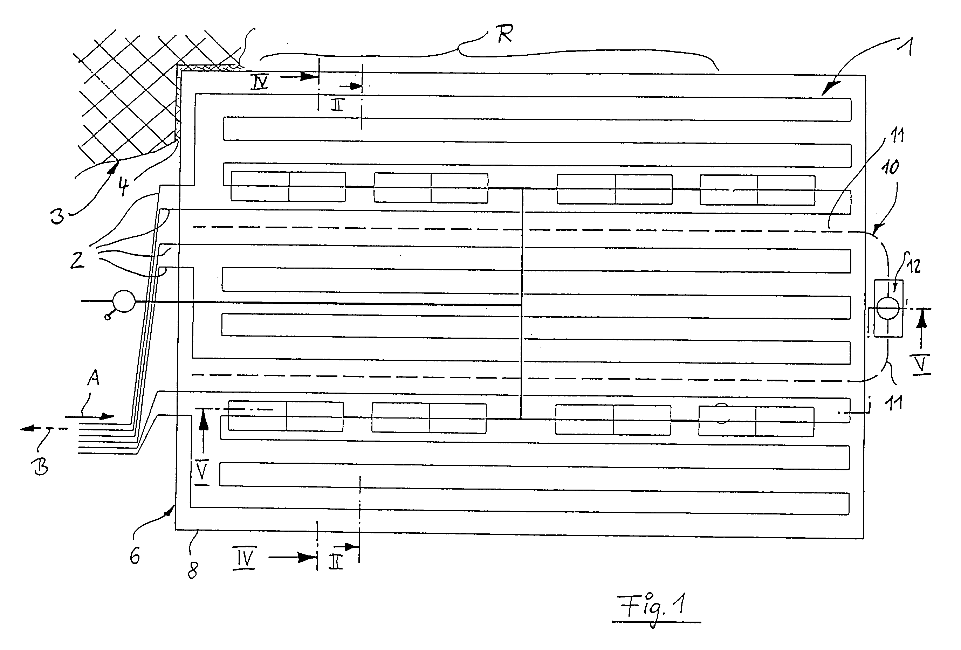

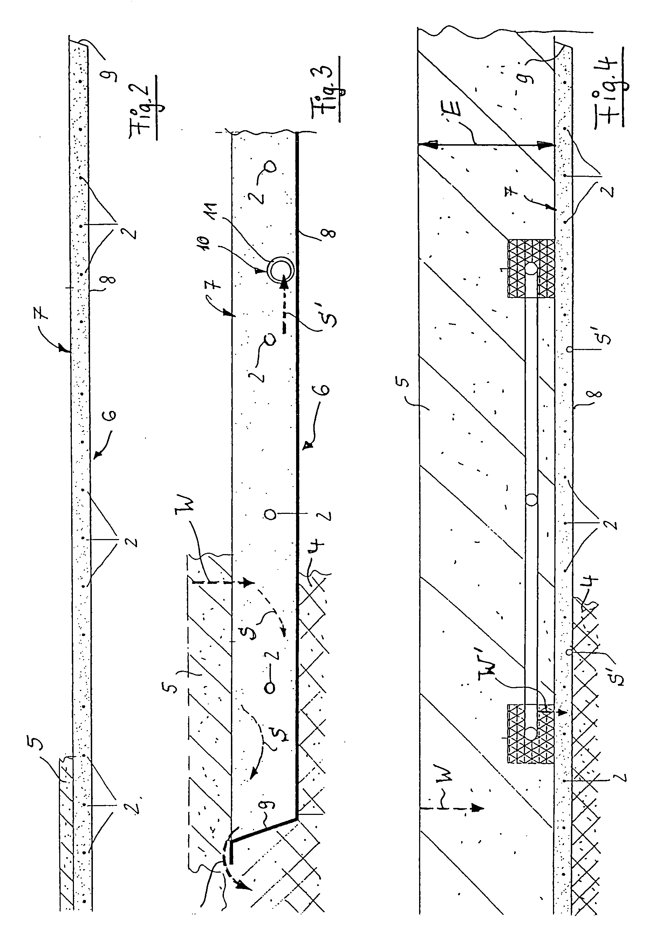

In Fig. 1 ist eine insgesamt mit 1 bezeichnete Vorrichtung zur Nutzung von Erdwärme dargestellt, die mehrere einen Flächenkollektor R als Wärmetauscher bildende Kollektorrohre 2 aufweist, die mäanderförmig im Erdreich 3 verlegt sind. In den Kollektorrohren 2 ist ein Trägermedium förderbar (Zulauf: Pfeil A, Ablauf: Pfeil B), das einer nicht näher dargestellten Wärmepumpe in einem Gebäude o. dgl. zuführbar ist, so daß auf Grundlage des im Trägermedium erzeugten Temperaturunterschiedes im Bereich der an sich bekannten Wärmepumpe eine entsprechende Nutzung der Erdwärme erreicht wird. Die Kollektorrohre 2 sind dabei in einer Erdmulde 4 unter einer Abdecklage 5 (Fig. 2) verlegt, so daß durch diese Abdecklage 5 versickerndes Wasser W, W' (Fig. 4) in den Bereich der Kollektorrohre 2 des Flächenkollektors R gelangt.

Die Vorrichtung 1 weist in erfindungsgemäßer Ausbildung eine die Erdmulde 4 bodenseitig abdeckende Wassersperrschicht 6 auf und über dieser ist eine Speicherlage 7 vorgesehen, in der die Kollektorrohre 2 verlaufen. Mit dieser funktionalen Einheit wird zugeführtes Wasser W, W' in seiner Versickerungsgeschwindigkeit gebremst und kann in der eine entsprechende Konsistenz aufweisenden Speicherlage 7 gespeichert werden.

Diese zumindest zeitweise Speicherung zugeführten Wassers W in der Speicherlage 7 ist bereits dann gewährleistet, wenn die Wassersperrschicht 6 in ihrer Konsistenz weniger wasserdurchlässig ist als die darüber verlaufende Speicherlage 7, so daß in diese zugeführtes Wasser gestaut werden kann bzw. gebremst weiterströmt. Als Wassersperrschicht 6 wirkt dabei bereits eine Lehm- oder Tonschicht am Boden der Erdmulde 4.

In vorteilhafter Ausführung ist die erfindungsgemäße Vorrichtung 1 mit einer Wassersperrschicht 6 in Form eines fluiddichten Wannenteils 8 ausgebildet, dessen Länge und Breite entsprechend der vorgesehenen Verlegefläche des Flächenkollektors R bemessen ist. Denkbar ist dabei, das als einstückig vorgeformte Baugruppe vorgesehene Wannenteile 8 so in die Vorrichtung 1 zu integrieren, daß dieses in der dargestellten Einbaulage unterhalb der Speicherlage 7 verläuft und diese vollflächig aufnimmt.

Für großflächig verlegte Kollektoren bzw. Flächenkollektoren R ist vorgesehen, die Wassersperrschicht 6 aus zumindest einer wannenförmig in der Erdmulde 4 verlegten Bahnware zu bilden. Diese kann zweckmäßig in Form einer Kunststofffolie, einer Textilbahn o. dgl. Material vorgesehen sein, mit dem zumindest bereichsweise die rückstauende Wirkung unterhalb der Speicherlage 7 erzielt wird. Bei einer Ausbildung der Wassersperrschicht 6 aus mehreren nebeneinander verlegten Folienbahnen aus Kunststoff können diese durch eine Schweiß- bzw. Klebverbindung fluiddicht miteinander verbunden werden, so daß die wasserundurchlässige Wanne durch vollständiges Auslegen der Erdmulde 4 gebildet ist.

Die Querschnittsdarstellungen gemäß Fig. 2 bis 7 zeigen, daß die wannenförmige Wassersperrschicht 6 jeweils bis zu einer diese umfangsseitig begrenzenden Seitenwand 9 hin mit der Speicherlage 7 gefüllt sind. Diese funktionale Einheit aus Wannenteil 8 und Speicherlage 7 ist in einer zur direkten Einleitung von Umgebungswärme geeigneten Einbautiefe E (Fig. 4) so positioniert, daß für das System optimale Bedingungen für den Wärme- und Wasseraustausch erreicht sind. Dabei wird dieses Erdwärme-System insbesondere dadurch in seiner Leistungsfähigkeit verbessert, daß die im Wannenteil 8 gehaltene Speicherlage 7 einen durch einen Rückstau eingeleiteten Wassers W konstanten und nur langsam veränderbaren Feuchtegrad aufweist. Dieser durch hohen Wassergehalt und durch die aktive Kapillarwirkung gekennzeichnete feuchte Zustand der Speicherlage 7 wird nur durch eine verzögerte Abgabe des aufgenommenen Wassers beeinflußt, die Kollektorrohre 2 sind langzeitig von sich ständig erneuernder Feuchtigkeit umgeben und damit kann die Wärmeentzugsleistung des Flächenkollektors R über einen längeren Zeitraum durch höhere Wärmeleitfähigkeit und Wärmespeicherfähigkeit des Erdreichs verbessert werden.

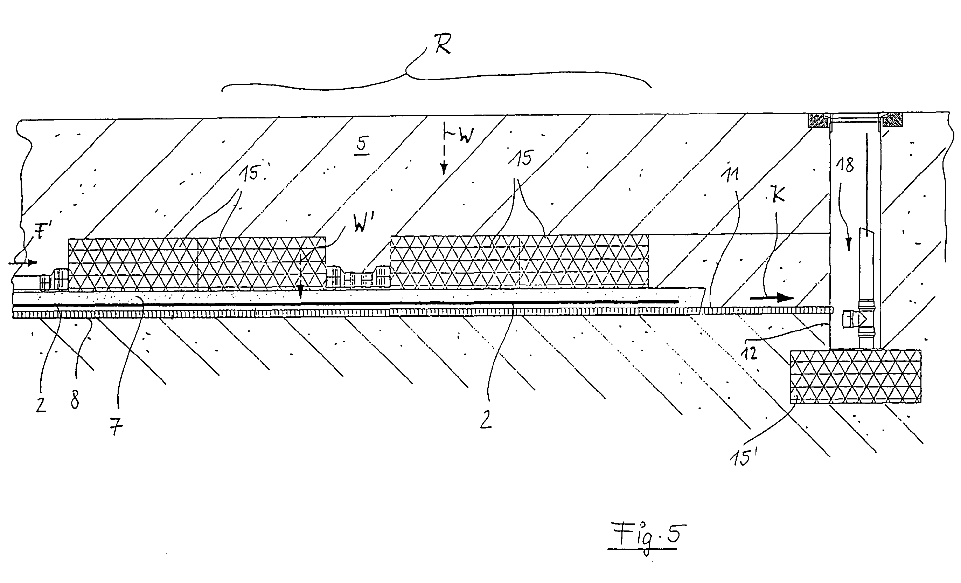

Diese verlängerte Nutzungsdauer resultiert vor allem auch daraus, daß die ein großes Speichervermögen aufweisende Lage 7 bei entsprechender Zuführung von Wasser W (Fig. 3) zumindest zeitweise bis zur Wassersättigung füllbar ist und auch danach das innerhalb der Vorrichtung 1 in der Speicherlage 7 enthaltene Wasser noch zumindest teilweise gezielt austauschbar ist.

Mit den in Fig. 5 bis 7 dargestellten Baugruppen als vorteilhafte Erweiterung der Vorrichtung 1 ist eine kontinuierliche Wasserzuführung und ein gedrosselter Wasseraustausch im Bereich des Wannenteils 8 möglich. Das in das Wannenteil 8 oberseitig eingeleitete Wasservolumen W (Fig. 3) dringt in die Speicherlage 7 ein und ein dabei dessen Sättigung übersteigender Wasseranteil wird über den Seitenwandteil 9 in das umgebende Erdreich abgeleitet (Pfeil D, Fig. 3), so daß in dem boden- und wandseitig geschlossenen Wannenteil 8 eine Strömung S dadurch wirksam ist, daß das nachfließende Wasser den bereits durch die Kollektorrohre 2 gekühlten Teil des Wassers im Wannenteil 8 verdrängen kann und die damit erzeugte Zirkulation den Wärmeaustausch und die Regeneration des Systems verbessert.

Für einen gedrosselten Wasserdurchlauf bzw. Wasseraustausch in einer Strömungsrichtung S' im Bereich des Wannenteils 8 ist in der Speicherlage 7 zusätzlich zu den Kollektorrohren 2 zumindest ein aus dem Wannenteil 8 herausführendes Drainageelement 10 vorgesehen, das insbesondere in Form eines Drainagerohres 11 ausgebildet ist. Denkbar ist auch, eine Drainagematte o. dgl. Bauteile in das System zu integrieren.

In Fig. 3 und 4 wird deutlich, daß das Drainagerohr 11 im Nahbereich des Bodens des Wannenteils 8 verläuft, die Seitenwand 9 durchgreift und in einem Sammelkanal 12 (Fig. 1) ausläuft.

Die Speicherlage 7 ist aus einem die Kollektorrohre 2 und das Drainagerohr 11 weitgehend dicht umhüllenden Füllmaterial aufgebaut, in dem das Wasser W durch Kapillarwirkung bis Geländeniveau erdfeucht (Speicherlage 5) gespeichert werden kann. Insbesondere ist dazu die Speicherlage 7 so aufgebaut, daß bei hinreichender Wasserzufuhr im Wannenteil 8 ein Feststoff-Wasser-Gemenge mit einem hohen Wasseranteil gebildet ist. Diese nach Art einer Sumpfzone bzw. eines Schlammbades gesättigte Gemengekonsistenz umgibt die Kollektorrohre 8 der Vorrichtung 1. Denkbar ist dabei auch, daß die Gemenge-Speicherlage 7 an Stelle der an sich bekannten Feststoffe in Form von Sand o. dgl. körnigem Füllmaterial aus einem einoder mehrlagigen Blockelement, beispielsweise aus geschäumten Kunststoff o. dgl., gebildet wird, diese blockförmige Speicherlage aus den Einzelteilen (nicht dargestellt) die jeweiligen Rohre 8 aufnimmt und darüber die Abdecklage 5 verläuft.

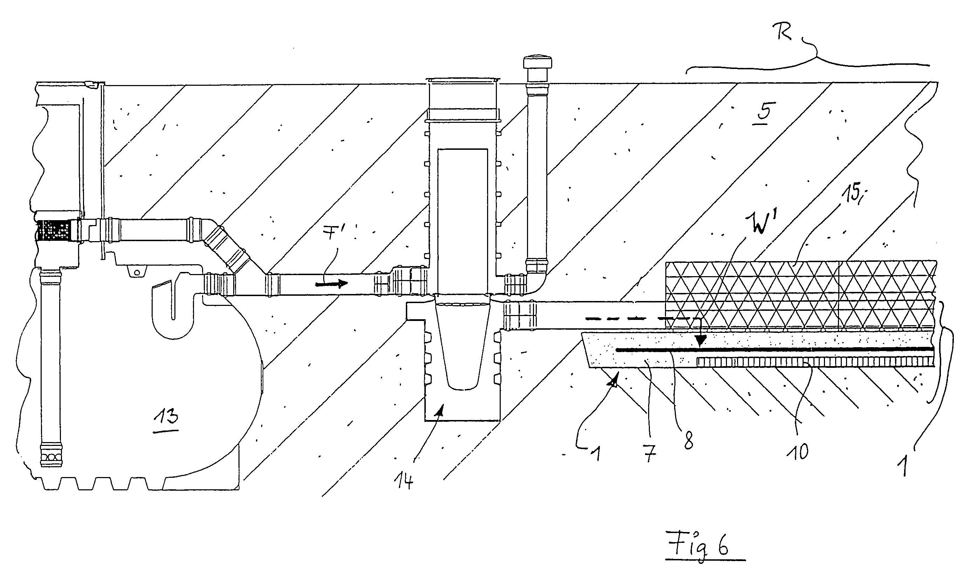

In den Darstellungen gemäß Fig. 4 bis 7 ist die Kopplung der Vorrichtung 1 mit einer zusätzlichen zum Niederschlagswasser in der Abdecklage 5 vorgesehenen Wassereinleitung dargestellt. Dabei ist eine oberhalb des Wannenteils 8 in der Abdecklage 5 verlaufende und mit einem Wassernutzungs- und/oder Versickerungssystem verbundene Wasserzuführung besonders vorteilhaft mit der Vorrichtung 1 kombinierbar. In Fig. 6 ist ein System mit einem unterirdischen Tank 13 dargestellt, mit dem in einer Förderrichtung F zugeführtes Wasser, beispielsweise Regenwasser, gespeichert werden kann. Ein jeweils überschüssiger Wasserteil wird in einer Förderrichtung F' einer zweiten Reinigungsbaugruppe 14 zugeführt und gelangt von dieser aus als Wasseranteil W' in die Zone des Flächenkollektors R.

Für die Aufnahme großer Wassermengen ist unmittelbar über der Speicherlage 7 ein Verteilerblock 15 vorgesehen, mit dem ein entsprechendes Wasservolumen aufnehmbar und eine zeitversetzte Einleitung des Wassers W' in die Vorrichtung 1 bzw. die Umgebung möglich ist. Dieses System ist insbesondere für die Versickerung von Regenwasser vorgesehen. Ebenso ist denkbar, dem in Fig. 5 und 6 dargestellten System Kühlwasser, gefiltertes Abwasser o. dgl. zuzuführen, so daß damit in der Förderrichtung F' ein weitgehend kontinuierlicher Zulauf in das System erreicht ist.

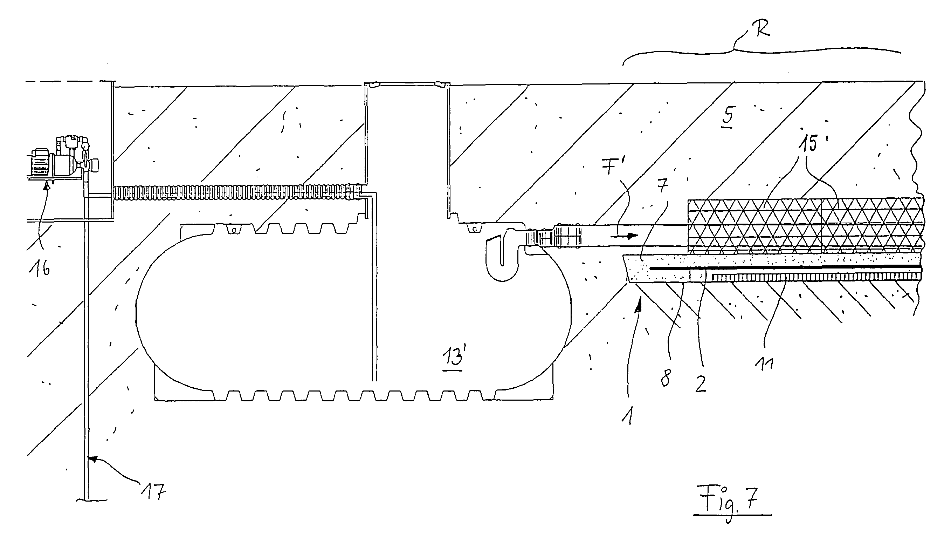

In der Ausführungsform gemäß Fig. 7 ist die Vorrichtung 1 ebenfalls mit einem Tank 13' verbunden, wobei dieser zur Aufnahme von Wasser an eine Pumpe 16 eines zum Grundwasser vorgetriebenen Brunnenrohres 17 angeschlossen ist.

Für eine verbesserte Regelung des Wasserdurchlaufs W' mittels der Drainagerohre 11 sind diese im Bereich des Sammelkanals 13 an ein insgesamt mit 18 bezeichnetes Steuersystem angeschlossen (Fig. 5), mit dem eine dosierte Ableitung (Pfeil K) des sich in den Drainagerohren 11 sammelnden Wassers derart möglich ist, daß im Bereich der Kollektorrohre 2 der stetige, jedoch für die Wärmenutzung hinreichend langsame Versickerungsprozeß (Strömung S'; Fig. 4) aufrecht erhalten wird. Durch diese Steuerung wird die für eine Steigerung der Entzugsleistung notwendige Wassersättigung des Gemenges in der Speicherlage 7 permanent gewährleistet, so daß damit der Flächenkollektor R langzeitig mit einer hohen spezifischen Entzugsleistung, bezogen auf jeweils 1 m² seiner Gesamtfläche (W/m²), betrieben werden kann.

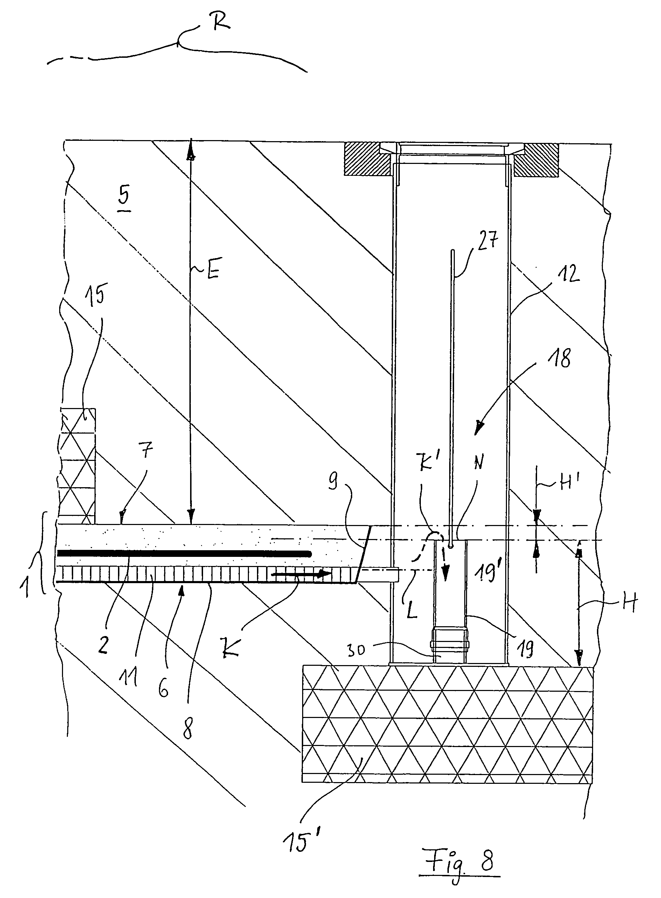

In Fig. 8 bis 13 sind weitere Einzelheiten des Steuerungssystems 18 für den Austausch der Regenerationsfeuchte im Bereich der Vorrichtung 1 dargestellt. Das Steuersystem 18 gemäß Fig. 8 weist dabei oberhalb eines zweiten, zugeführtes Wasser aufnehmenden Sickerblockes 15' ein Überlaufrohr 19 auf, dessen Höhe H an die Einbautiefe E der Vorrichtung 1 angepaßt ist. Das Steuersystem 18 kann damit als Drosselvorrichtung wirksam werden, da der in Zuführrichtung K eingeleitete Teil des aus der Vorrichtung 1 ausströmenden Wassers in dem Sammelkanal 12 bis auf die Höhe H aufgestaut wird und erst danach in einer Strömungsrichtung K' die Weiterleitung zu dem Sickerblock 15 hin erfolgt. Die Oberkante des Rohres 19 endet dabei in einem Abstand H' unterhalb der Seitenwandung 9 des Wannenteils 8, so daß damit im Drainagerohr 11 ein Rückstau erzeugt werden kann. Die vorteilhafte Wassersättigung des Gemenges in der Speicherlage 7 ist damit zumindest für die Zeit gewährleistet, während der im Füllraum 19' des Steuersystems 18 oberhalb der Strömungsebene L des Drainagerohres 11 Wasser angestaut ist.

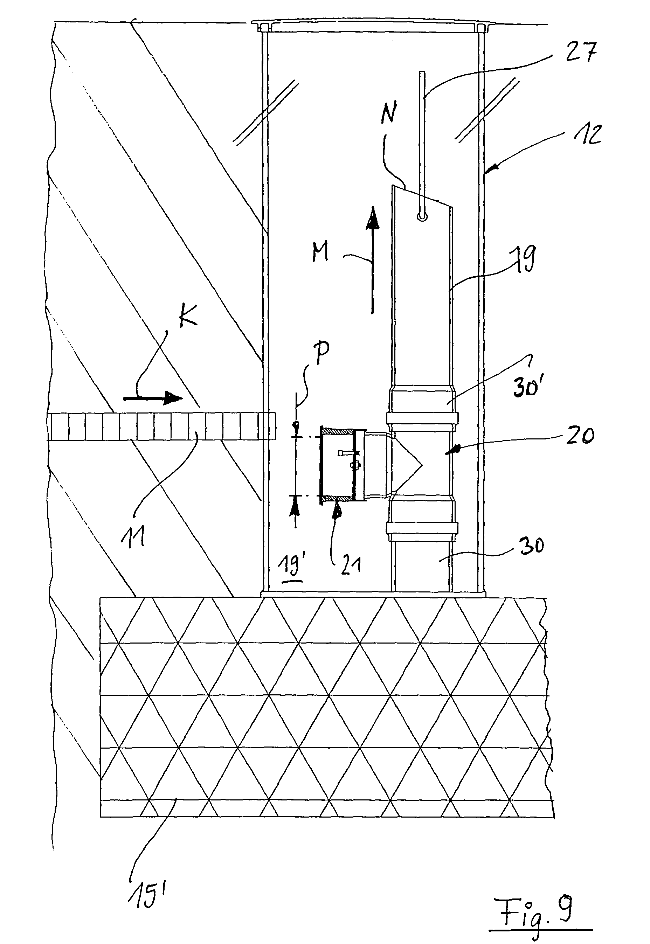

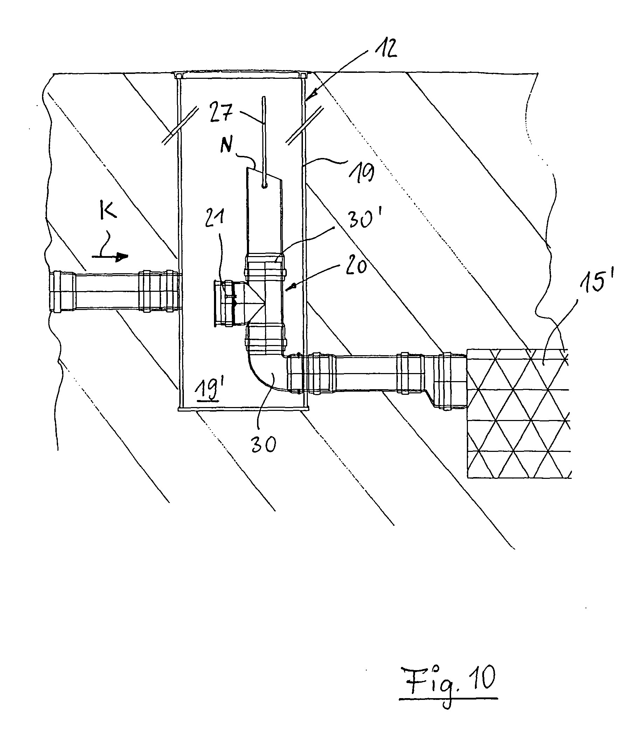

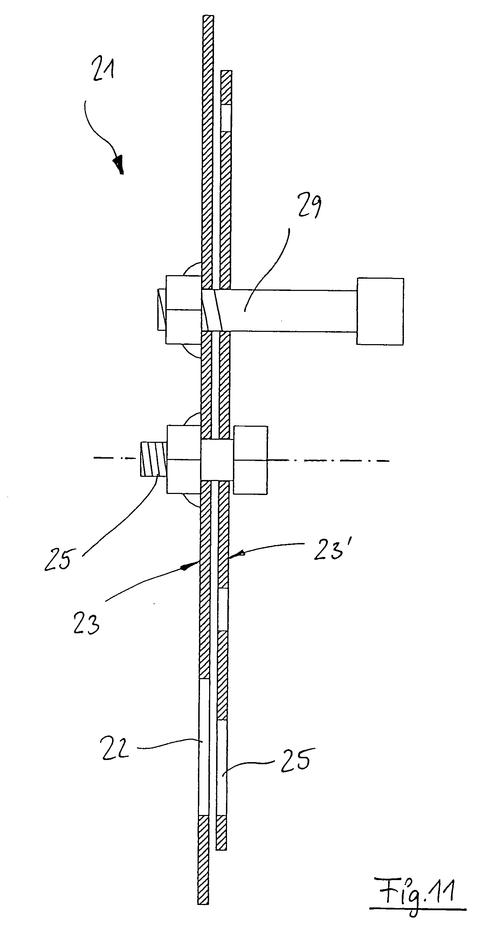

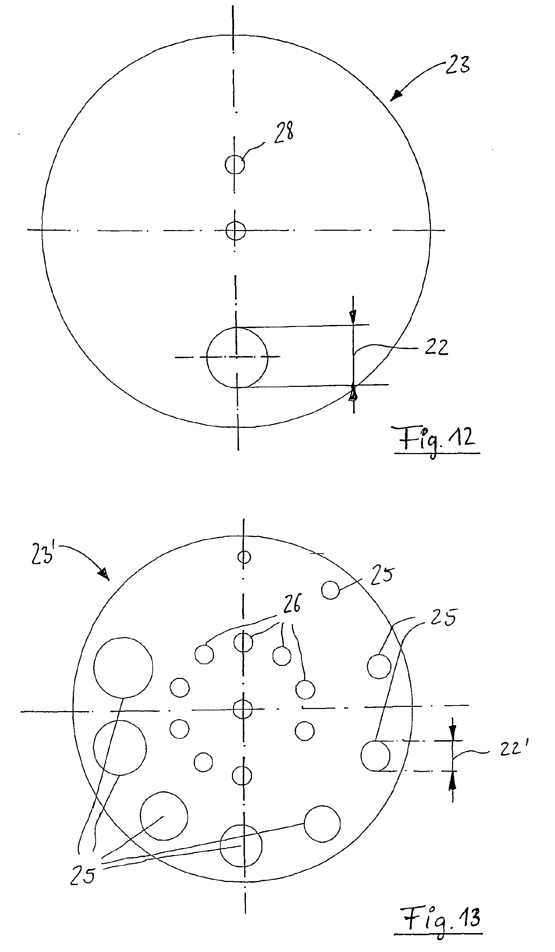

In Fig. 9 und 10 ist das Überlaufrohr 19 mit einem T-Stück 20 versehen, in dem eine Drosselvorrichtung 21 (Fig. 11) vorgesehen ist. Diese Drosselvorrichtung 21 weist in einfachster Ausführung eine den Einlaßquerschnitt P des T-Stückes 20 verengenden Abdeckscheibe 23 auf (Fig. 12), in die ein an das System anpaßbarer Durchlaßquerschnitt 22 eingebracht ist, so daß über diesen die permanente Ableitung des aus dem Sammelrohr 11 strömenden Wassers möglich ist. Bei zu starkem Wasseraufkommen ist das an seiner oberen Stirnseite N offene Überlaufrohr 19 zur Ableitung vorgesehen. Das Überlaufrohr 19 weist außerdem einen Griffteil 27 auf, mit dem der Einlauf in den Sickerblock 15' (Stutzen 30, 30') durch Ziehen des Rohres 19 (Pfeil M) freigebbar ist.

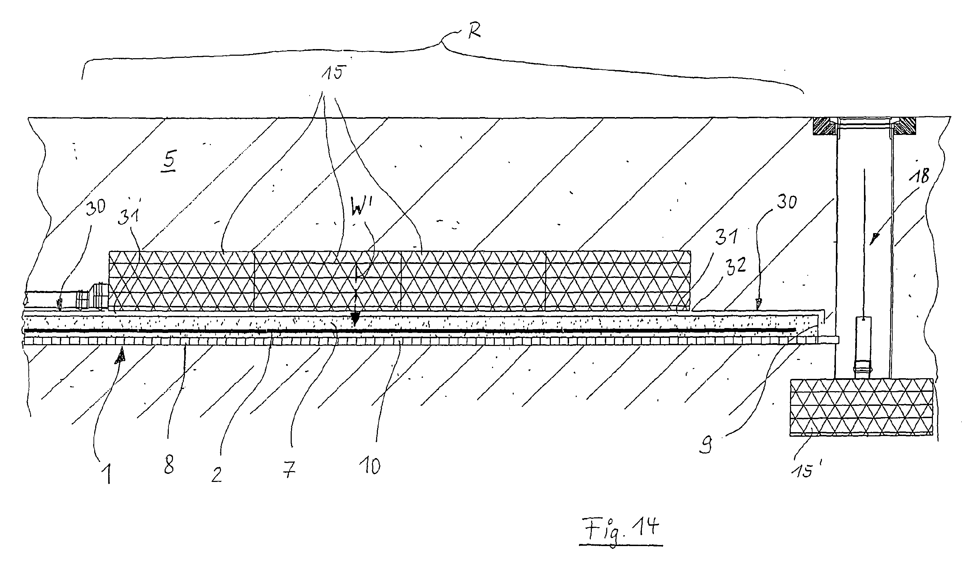

In vorteilhafter Ausführung ist die Drosselvorrichtung 21 (Fig. 11) mit einer Abdeckscheibe 23' (Fig. 13) versehen, in der mehrere Auslaßöffnungen 25 mit unterschiedlichen Durchlaßquerschnitten 22' vorgesehen sind. Diese Abdeckscheibe 23' kann gemeinsam mit der Abdeckscheibe 23 auf einem Tragbolzen 25 festgelegt werden (Fig. 11). Durch jeweilige Verbindungsöffnungen 26 in der Abdeckscheibe 23' und eine Halteöffnung 28 in der Abdeckscheibe 23 kann die Scheibe 23' mit jeweils einer ihrer Öffnungen 25 in Übereinanderlage mit der Öffnung 22 verbracht werden (Fig. 11), so daß die jeweilige Durchlaßposition mit einem entsprechend dem System eingestellten Durchlaßquerschnitt erreicht ist.

In Fig. 14 ist eine Darstellung der Vorrichtung 1 ähnlich Fig. 5 gezeigt, wobei das Wannenteil 8 oberhalb der Speicherlage 7 mit einer deren Oberfläche zumindest bereichsweise bedeckenden Deckfolie 30 versehen ist. Bei der Montage der Vorrichtung 1 wird nach dem Einfüllen der Speicherlage 7 die Deckfolie 30 so ausgelegt, daß diese bis zum jeweiligen Seitenrand 9 des Wannenteils 8 hin eine Abdeckung bildet. Im Bereich unterhalb der Verteilerblöcke 15 ist die Deckfolie 30 mit einem Ausschnitt 31 versehen, so daß in diesem freien Bereich das eingeleitete Wasser (Pfeil W') aus den Verteilerblöcken 15 ungehindert in die Speicherlage 7 eintreten kann. Durch die allseitig neben den Verteilerblöcken 15 befindliche Deckfolie 30 wird erreicht, daß ein ungewollter Wasseraustritt aus der Speicherlage 7 in die Abdecklage 5 verhindert ist. Die Deckfolie 30 ist dabei so verlegt, daß die Kapillarwirkung aus der Speicherlage 7 zur Abdecklage 8 hin unterbrochen wird.

In zweckmäßiger Ausführung besteht die Deckfolie 30 aus einer oder mehreren Kunststoffbahnen, in die ein entsprechend bemessener Ausschnitt 31 unter Bildung einer Schnittkante 32 eingebracht ist. Ebenso ist denkbar, daß im Bereich des Ausschnittes 31 ein den Wasserdurchtritt freigebendes Siebgewebe vorgesehen ist. Die Deckfolie 30 kann auch aus einem in einer Richtung wasserdurchlässigen Material, beispielsweise einer semi-permeablen Geotextilbahn, bestehen, so daß zwar der Eintritt von Wasser aus dem Bereich der Verteilerblöcke 15 oder der auf der Deckfolie 30 aufliegenden Zone der Abdecklage 5 möglich ist, aber ein Rückfluß von Wasser und damit eine ungewollte Entwässerung der Speicherlage 7 unter Kapillarwirkung vermieden wird.

## Patentansprüche

1. Vorrichtung zur Nutzung von Erdwärme, mit insbesondere einen Flächenkollektor (R) als Wärmetauscher bildenden und ein Trägermedium zu einer Wärmepumpe fördernden Kollektorrohren (2), die in Einbaulage in einer Erdmulde (4) unter einer Abdecklage (5) verlegt sind, wobei durch diese Abdecklage (5) versickerndes Wasser (W; W') in den Bereich des Flächenkollektors (R) zuführbar ist, **dadurch gekennzeichnet, daß** die Vorrichtung (1) mit einer den Bereich der Erdmulde (4) bodenseitig abdeckenden Wassersperrschicht (6) versehen ist und über dieser die Kollektorrohre (2) in einer zugeführtes Wasser (W; W') aufnehmenden Speicherlage (7) verlaufen.

2. Vorrichtung nach Anspruch 1, **dadurch gekennzeichnet, daß** die Wassersperrschicht (6) zumindest bereichsweise wasserdurchlässig ist.

3. Vorrichtung nach Anspruch 1, **dadurch gekennzeichnet, daß** die Wassersperrschicht (6) in Form eines fluiddichten Wannenteils (8) ausgebildet ist.

4. Vorrichtung nach Anspruch 3, **dadurch gekennzeichnet, daß** das Wannenteil (8) einstückig geformt ist.

5. Vorrichtung nach einem der Ansprüche 1 bis 3, **dadurch gekennzeichnet, daß** als Wassersperrschicht (6) zumindest eine wannenförmig verlegte Bahnware in Form einer Kunststofffolie, Textilbahn o. dgl. vorgesehen ist.

6. Vorrichtung nach Anspruch 5, **dadurch gekennzeichnet, daß** die Wassersperrschicht (6) aus mehreren fluiddicht miteinander verbundenen Folienbahnen aus Kunststoff besteht.

7. Vorrichtung nach einem der Ansprüche 1 bis 6, **dadurch gekennzeichnet, daß** die wannenförmige Wassersperrschicht (6) bis zur diese umfangsseitig begrenzenden Seitenwand (9) hin mit der Speicherlage (7) gefüllt ist.

8. Vorrichtung nach einem der Ansprüche 1 bis 7, **dadurch gekennzeichnet, daß** das Wannenteil (8) bzw. die Wassersperrschicht (6) eine zur direkten Einleitung von Umgebungswärme in die Speicherlage (7) geeignete Einbautiefe (E) aufweist.

9. Vorrichtung nach einem der Ansprüche 1 bis 8, **dadurch gekennzeichnet, daß** die im Wannenteil (8) gehaltene Speicherlage (7) einen durch einen Rückstau eingeleiteten Wassers (W) veränderbaren Feuchtegrad aufweist.

10. Vorrichtung nach einem der Ansprüche 1 bis 9, **dadurch gekennzeichnet, daß** die Speicherlage (7) zumindest zeitweise bis zur Wassersättigung füllbar ist.

11. Vorrichtung nach einem der Ansprüche 1 bis 10, **dadurch gekennzeichnet, daß** das in der Speicherlage (7) enthaltene Wasser zumindest teilweise austauschbar ist.

12. Vorrichtung nach einem der Ansprüche 1 bis 11, **dadurch gekennzeichnet, daß** in das Wannenteil (8) oberseitig ein definiertes Wasservolumen einleitbar und ein die Wassersättigung der Speicherlage (7) übersteigender Wasseranteil (Pfeil D; K) aus dem Wannenteil (8) ausleitbar ist.

13. Vorrichtung nach einem der Ansprüche 1 bis 12, **dadurch gekennzeichnet, daß** über die Seitenwand (9) der die Sättigung der Speicherlage (7) übersteigende Wasseranteil (D) aus dem Wannenteil (8) in das umgebende Erdreich ableitbar ist.

14. Vorrichtung nach einem der Ansprüche 1 bis 13, **dadurch gekennzeichnet, daß** der Wasseranteil in der Speicherlage (7) des Wannenteils (8) durch einen gedrosselten Wasseraustausch regulierbar ist.

15. Vorrichtung nach einem der Ansprüche 1 bis 12, **dadurch gekennzeichnet, daß** in der Speicherlage (7) zusätzlich zu den Kollektorrohren (2) zumindest ein aus dem Wannenteil (8) herausführendes Drainageelement (10) vorgesehen ist.

16. Vorrichtung nach einem der Ansprüche 1 bis 15, **dadurch gekennzeichnet, daß** das Drainageelement (10) im Nahbereich des Wannenbodens verläuft, die Seitenwand (9) des Wannenteils (8) durchgreift und in einem Sammelkanal (12), einem Zwischenspeicher o. dgl. Bauteile eines Versickerungssystems ausmündet.

17. Vorrichtung nach Anspruch 16, **dadurch gekennzeichnet, daß** im Wannenteil (8) als Drainageelement (10) ein Drainagerohr (11), eine Drainagematte o. dgl. vorgesehen ist.

18. Vorrichtung nach Anspruch 16 oder 17, **dadurch gekennzeichnet, daß** das aus dem Wannenteil (8) ausmündende Drainagerohr (11) im Bereich des Sammelkanals (12) mit einer Drosselvorrichtung (21), einem als Überlauf vorgesehenen Standrohr (19) o. dgl. zusammenwirkt, derart, daß mit in deren Bereich verzögert ableitbarem Wasservolumen ein Rückstau im Drainagerohr (11) gebildet ist.

19. Vorrichtung nach einem der Ansprüche 1 bis 18, **dadurch gekennzeichnet, daß** die Speicherlage (7) aus einem die Kollektorrohre (2) umhüllenden und Wasser für Kapillarwirkung aufnehmenden Material aufgebaut ist.

20. Vorrichtung nach Anspruch 19, **dadurch gekennzeichnet, daß** die Speicherlage (7) als jeweiligen Feststoff Sand, Feinsand, Kies, Schlacke o. dgl. Füllmaterial enthält und dieses im Wannenteil (8) ein Feststoff-Wasser-Gemenge bildet.

21. Vorrichtung nach einem der Ansprüche 1 bis 19, **dadurch gekennzeichnet, daß** die Speicherlage (7) aus einem ein- oder mehrlagigen Blockelement aus geschäumten Kunststoff o. dgl. gebildet ist.

22. Vorrichtung nach einem der Ansprüche 1 bis 21, **dadurch gekennzeichnet, daß** oberhalb des Wannenteils (8) eine in der Abdecklage (5) verlaufende und mit einem Wassernutzungs- und/oder Versickerungssystem verbundene Wasserzuführung (F; F') vorgesehen ist.

23. Vorrichtung nach Anspruch 22, **dadurch gekennzeichnet, daß** dem Wannenteil (8) Regenwasser, Brunnenwasser, gefiltertes Abwasser, Kühlwasser o. dgl. zuführbar ist.

24. Vorrichtung nach einem der Ansprüche 1 bis 23, **dadurch gekennzeichnet, daß** das Wannenteil (8) oberhalb der Speicherlage (7) mit einer deren Oberfläche zumindest bereichsweise bedeckenden und einen Wasseraustritt aus der Speicherlage (7) in die Abdecklage (5) verhindernden Deckfolie (30) versehen ist.

25. Vorrichtung nach Anspruch 24, **dadurch gekennzeichnet, daß** die als Kunststoffbahn, Geotextil-Folie o. dgl. ausgebildete Deckfolie (30) unterhalb der Verteilerblöcke (15) mit einem Ausschnitt (31) versehen ist.

26. Vorrichtung nach Anspruch 24 oder 25, **dadurch gekennzeichnet, daß** die Deckfolie (30) zumindest bereichsweise aus einem Siebgewebe, einem in einer Richtung wasserdurchlässigen Material o. dgl. Struktur besteht.
